# FASCICULE DE BREVET EUROPEEN

(11) **EP 0 542 623 B1**
(45) Date de publication et mention de la délivrance du brevet: **09.09.1998**
(21) Numéro de dépôt: 92403047.1
(22) Date de dépôt: 12.11.1992
(51) Int. Cl.: G06T 7/00

(54) **Procédé et dispositif d'acquisition et de traitement d'images radioscopiques**
Verfahren und Vorrichtung zur Gewinnung und Verarbeitung von Durchleuchtungsbildern
Process and device for acquiring and processing radioscopic images

(30) Priorité: 15.11.1991 FR 9114068
(43) Date de publication de la demande: 19.05.1993
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Prejean Lefevre, Véronique Hélène Marie Pierre, F-92330 Sceaux (FR)

(56) Documents cités:
- EP-A- 234 537
- GB-A- 2 129 546
- IBM TECHNICAL DISCLOSURE BULLETIN. vol. 30, no. 4, Septembre 1987, NEW YORK US pages 1647 - 1649 'multiple-image vision inspection process'

## Description

L'invention concerne un procédé et un dispositif d'acquisition et de traitement d'images radioscopiques temps réel.

L'invention s'applique à la détection des défauts de matériaux rentrant dans la composition de pièces mécaniques diverses, notamment de pièces telles que des aubes de turbine.

L'invention concerne un procédé et un dispositif d'acquisition et de traitement d'images radioscopiques temps réel faisant appel à une source à rayons X et à un détecteur à amplificateur de brillance pour obtenir une radioscopie du matériau de la pièce à contrôler.

Le dispositif comporte en outre des moyens vidéo permettant d'obtenir des images numériques et des moyens de traitement permettant d'opérer différents filtrages pour détecter d'éventuels défauts du matériau de la pièce à contrôler.

Il est connu du document US-4 125 771 d'utiliser un appareil à rayons X pour l'analyse des contraintes résiduelles et de la structure cristallographique de matériaux à base de nickel ou de titane. L'appareil comprend pour cela deux sources de rayons X qui irradient la même surface suivant des angles différents et deux détecteurs pour détecter les rayons X diffractés selon des plans cristallographiques particuliers.

Il est également connu du brevet FR-2 643 716 d'utiliser un faisceau de rayons X pour le contrôle de la qualité cristallographique d'objets de grande dimension à structure monocristalline, tels que des aubes de turbine. L'appareil comprend pour cela un amplificateur de brillance, un appareil de prise de vues vidéo et un moyen de traitement d'images par ordinateur.

On pourra également se reporter à l'état de la technique constitué par le brevet EP-0 234 537 dans lequel il est décrit un dispositif d'inspection automatique par rayons X pour détecter des défauts dans des aubes de turbine. Ce dispositif comprend notamment un système d'acquisition de données, un système de visualisation, un ordinateur et un logiciel pour le stockage du traitement des données. Dans le document IBM Technical Disclosure Bulletin, Vol. 30, N°4, Septembre 1987, pages 1647-49 : "Multiple-image vision inspection process", on décrit une méthode d'inspection selon laquelle on acquiert plusieurs images d'un objet dans des conditions extérieures différentes et on les combine par un opérateur mathématique pour accroître le nombre d'informations acquises par le système de vision.

La demanderesse a constaté qu'en utilisant ces techniques classiques et en particulier un dispositif dans lequel on procéde à une inspection automatique par rayons X et dans lequel on emploie ensuite un amplificateur de brillance et une chaîne de prise de vues avec caméra vidéo et moyens de traitement de l'image, que le rapport signal sur bruit se dégrade au fur et à mesure des contrôles, cette dégradation étant due à des perturbations diverses de la chaîne de contrôle.

Ne connaissant pas les causes exactes de cette dégradation du rapport signal sur bruit, la demanderesse a procédé à une étude du comportement d'une telle installation. Pour réaliser cette étude, deux images ont été prises à partir de la chaîne radioscopique, l'acquisition de ces deux images étant faite successivement dans les mêmes conditions de tir et sans aucun déplacement la pièce. On a pu confirmer ainsi que l'image de la pièce présentait des variations de niveau de fond, de contraste sur les indications et de bruit résiduel.

D'autre part, la demanderesse a constaté que la correction de fond destinée à corriger le défaut de la chaîne de prise de vues et qui est mise en oeuvre par le système de traitement d'images, semble perdre de son efficacité au cours du temps.

L'image obtenue dépend de toute la chaîne de contrôle, les perturbations proviennent donc potentiellement de l'émission des rayons X, de l'amplificateur de brillance, de la caméra ou du système de traitement d'images.

La présente invention permet de remédier à ces problèmes. Elle a pour objet un procédé d'acquisition et de traitement d'images radioscopiques en temps réel pour le contrôle d'une pièce, consistant à obtenir au moins deux images radioscopiques successives dans des conditions identiques pour chaque vue de la pièce à contrôler, à convertir ces images radioscopiques en images vidéo-numériques et à traiter chaque image d'une part en réalisant une correction de chaque image par rapport à elle-même et d'autre part, en réalisant une correction de l'image déjà corrigée par rapport à elle-même, cela par rapport à une image de référence d'une pièce ne présentant pas de défaut. L'image de référence, comme l'image inspectée, a été au préalable corrigée par rapport à elle-même. Le procédé consiste ensuite à réaliser une binarisation des images par une opération de seuillage, puis à superposer les images binaires ainsi obtenues pour déterminer les points images se correspondant et détecter ainsi les défauts de la pièce.

La première correction consiste à réaliser un filtrage morphologique ou fréquentiel-linéaire sur points classés ; la deuxième correction consiste à réaliser un filtrage morphologique ou fréquentiel pour détacher l'image du fond.

La binarisation des images se fait par comparaison de chaque image à un seuil, pour ne conserver que les points images qui sont supérieurs ou égaux à ce seuil et qui sont susceptibles de correspondre à un défaut de la pièce.

L'invention a également pour objet un dispositif d'acquisition et de traitement d'images radioscopiques en temps réel pour le contrôle d'une pièce comportant des moyens d'obtention, dans des conditions identiques, d'au moins deux images de chaque vue de la pièce à contrôler, les moyens de traitement des images comprenant des premiers moyens de correction de chaque image et des deuxièmes moyens de correction de chaque image, des moyens de seuillage et des moyens assurant une fonction "ET" logique entre les deux images après seuillage.

La présente invention sera mieux comprise à l'aide de la description qui suit et qui est donnée à titre indicatif et nullement limitatif. Cette description se réfère à des dessins annexés sur lesquels :
- la figure 1 représente les différentes étapes du procédé conforme à l'invention sous la forme d'une succession de blocs fonctionnels ;
- la figure 2 représente un dispositif permettant de mettre en oeuvre le procédé conforme à l'invention.

Conformément au procédé, la pièce à contrôler est irradiée successivement au moins deux fois dans des conditions identiques selon une même vue, de manière à obtenir après passage dans un amplificateur de brillance et une optique de focalisation deux images P1 et P2.

Ces images font l'objet d'une conversion en images vidéo au moyen d'une caméra vidéo pour constituer des images numériques I1, I2 de taille N x N pixels (points images, N étant égal classiquement à 512) codées avec une dynamique qui est, à titre d'exemple, de 256 niveaux de gris. Ces opérations correspondent à l'étape représentée par le bloc portant la référence 10. Après cette conversion en images numériques vidéo, le procédé consiste à réaliser un ensemble de traitements sur les deux images, ces traitements étant représentés par le bloc fonctionnel 20 sur la figure 1.

L'un des premiers traitements consiste à réaliser une correction de chacune des images par rapport à elle-même.

On procède pour cela à un premier filtrage morphologique sur points classés (non linéaire) ou fréquentiel-linéaire des matrices de pixels de chaque image. Ce filtrage permet d'éliminer les minima et les maxima locaux des différents sous-ensembles élémentaires de pixels constituant ces matrices. Ainsi, les images subissent un "lissage".

On procède ensuite à un deuxième filtrage qui peut être un filtrage morphologique ou fréquentiel. Dans le premier cas, cette opération correspond à une succession de dilatation, d'érosion et de soustraction de l'image du fond par rapport à l'image elle-même. Lors d'un filtrage fréquentiel, les fréquences correspondant aux défauts que l'on souhaite mettre en évidence sont supprimées de l'image initiale.

Ces premières corrections de l'image par rapport à elle-même permettent, comme on va le voir dans la suite des traitements, de ne pas rajouter dès le début des traitements du bruit dû au défaut de positionnement d'une pièce de référence que l'on utilise en général pour détacher l'image du fond.

Ces opérations correspondent à l'étape représentée par le bloc fonctionnel 31 de la figure 1 :
I1/I1 → F1
I2/I2 → F2

Conformément au procédé, et cela va être détaillé dans la suite, on utilise également une pièce de référence pour corriger les images, mais ces traitements interviennent après ces premiers filtrages, si bien que l'image présente déjà un meilleur rapport signal/bruit.

Le procédé consiste donc ensuite à réaliser une deuxième correction de chaque image. Cette correction peut être réalisée par des opérations de soustraction ou de division de l'image par rapport à l'image de référence afin de détacher l'image des indications du fond. Le fond est obtenu au moyen d'une image de référence prise à partir d'une pièce de même type mais ne présentant aucun défaut, les conditions de prise de vues de la pièce de référence étant identiques à celles employées pour les différents contrôles.

Cette étape correspond au bloc fonctionnel 32 de la figure 1 :
F1/REF → G1
F2/REF → G2

Afin de réduire encore le bruit aléatoire, on pourra selon une variante d'exécution réaliser successivement deux images de référence de la même pièce de référence pour filtrer l'une des images par l'une de ces images de référence et l'autre image par l'autre image de référence.

Le procédé consiste ensuite à réaliser une binarisation de chacune des images ainsi corrigées. Cette étape correspond au bloc fonctionnel 33 de la figure 1.

La binarisation est réalisée par seuillage des images. On utilise pour cela un double seuil prédéterminé afin d'éliminer de l'image les pixels qui se trouvent en dehors de ces valeurs de seuil. Le seuil correspond à l'un des niveaux de gris des images codées. A titre d'exemple, le seuil choisi est 0,123 :
S2>G1≥S1 T1
S2>G2≥S1 T2.

Après binarisation des deux images on réalise un ET logique entre ces deux images de manière à ne conserver que les pixels communs aux deux images, pixels qui traduisent la présence de défauts. Cette étape correspond au bloc fonctionnel 34 de la figure 1.

L'ensemble de ces traitements permet de séparer du fond les éventuels défauts contenus dans la pièce à analyser et la représenter sous forme d'image binaire.

Le traitement des deux images avant seuillage permet d'homogénéiser la luminance, de minimiser l'influence du bruit de fond, d'accroître les contrastes des images et donc de faciliter leur binarisation.

L'utilisation d'au moins deux images d'une même vue permet ensuite au moyen de la fonction ET logique après tous les traitements d'améliorer le rapport signal à bruit.

Le taux de fausse alarme est donc réduit. En effet, le procédé conforme à l'invention permet de diminuer le nombre de cas où l'on déclare qu'il y a détection d'un défaut alors qu'il n'y en a pas.

Les traitements d'images par filtrage morphologique ou fréquentiel-linéaire se font de manière classique au moyen de processeurs spécialisés, disponibles dans le commerce.

La figure 2 représente le schéma d'un dispositif de mise en oeuvre du procédé. Ce dispositif comporte un tube à rayons X portant la référence 50 qui permet d'envoyer des rayons X au travers de la pièce à contrôler 60.

Bien entendu, des moyens peuvent être prévus pour déplacer cette pièce 60 de façon automatique sous l'axe du rayonnement du tube 50, de manière à obtenir des vues différentes de cette pièce. Ces moyens n'ont pas été représentés sur la figure.

Dans l'axe sous lequel le rayonnement a lieu, sont placés des moyens 70 comprenant des moyens de détection 71 et de focalisation 72 des électrons obtenus par le passage des photons X à travers la structure cristalline de l'objet 60.

Ces moyens comprennent en outre un écran de sortie 73 assurant la conversion électrons/photons lumineux.

Une caméra vidéo 90 permet de transformer l'image photonique en un signal vidéo se présentant sous la forme d'une image numérique représentative de la structure de l'objet.

Entre l'écran de sortie 73 qui fait partie de l'ensemble détection/focalisation 70 et la caméra 90, peut être placé un miroir à 45° permettant de renvoyer les photons lumineux suivant l'axe dans lequel est placée la caméra 90. Ce miroir porte la référence 80 sur la figure.

Le signal vidéo issu de la caméra 90 rentre dans des moyens de traitement 100, lesquels sont couplés à une console opérateur 110.

En pratique, les éléments de ce dispositif (qui constituent la chaîne de contrôle) sont reliés électroniquement à cette console opérateur 110 de manière à ce que l'opérateur puisse commander les différentes opérations et en particulier les différents réglages de positionnement des éléments les uns par rapport aux autres.

L'ensemble de ces opérations de réglage et de commande de positionnement sont classiques et connues par l'homme de métier.

Les moyens de traitement 100 sont des moyens de traitement d'images classiques comportant des moyens de mémorisation et des processeurs. Un premier processeur permet par exemple de réaliser les opérations d'intégration d'images. Les images traitées conformément à ce procédé sont obtenues après intégration de N images chacune. L'intégration d'images est une technique connue et couramment employée pour réduire le bruit.

Les moyens de traitement comportent en outre de manière connue un ou plusieurs processeurs spécialisés permettant d'obtenir les différents filtrages morphologique ou fréquentiel-linéaire des images en niveaux de gris et les filtrages morphologiques mathématiques binaires permettant d'obtenir les images binaires.

Par ailleurs et de façon plus précise, conformément à l'invention les moyens de détection 70 comportent un amplificateur de brillance 71, une optique de focalisation 72 et un écran de sortie 73 de diamètre inférieur à celui de l'amplificateur de brillance. La caméra est une caméra à tube ou CCD.

Comme cela a été dit précédemment, chacune des images obtenues est le résultat d'une intégration de N images, N étant égal par exemple à 250 pour chaque image.

Selon un exemple de réalisation les 250 intégrations d'images sont réalisées en dix secondes.

En fait, le procédé selon l'invention, au lieu d'intégrer une image N fois en laissant subsister des parasites rémanents, comme dans les procédés de contrôle connus, prévoit l'intégration de deux images N/2 fois et procure ainsi les avantages précédemment notés sans augmentation sensible du temps d'acquisition.

## Revendications

1. Procédé d'acquisition et de traitement d'images radioscopiques en temps réel pour le contrôle d'une pièce comprenant les étapes suivantes :
- obtention d'au moins deux images radioscopiques successives dans des conditions identiques pour chaque vue de la pièce à contrôler ;
- conversion de ces images radioscopiques en images vidéo numériques codées sur plusieurs niveaux de gris ;
- traitement de chaque image, ce traitement comportant les sous-étapes suivantes :
· correction par filtrage numérique de chaque image par rapport à elle-même,
· correction des images filtrées par comparaison avec une image de référence,
· binarisation des images par comparaison de chaque image à un seuil pour ne conserver que les points images qui sont supérieurs ou égaux à ce seuil et qui sont susceptibles de correspondre à un défaut de la pièce,
- et superposition des images pour déterminer les points images se correspondant et détecter ainsi les défauts de la pièce.

2. Procédé d'acquisition et de traitement selon la revendication 1, caractérisé en ce que la sous-étape de correction de chaque image par filtrage numérique consiste à réaliser :
- un premier filtrage morphologique non linéaire ou fréquentiel-linéaire des matrices de pixels de chaque image pour éliminer les minima et les maxima locaux des différents sous-ensembles élémentaires de pixels constituant les matrices ;
- un deuxième filtrage morphologique ou fréquentiel de chaque image par rapport à elle-même permettant d'obtenir une image filtrée.

3. Procédé d'acquisition et de traitement selon la revendication 1, caractérisé en ce que la correction de chaque image filtrée par comparaison à une image de référence consiste à :
- obtenir une image de référence à partir d'une pièce de même type ne présentant aucun défaut ;
- faire subir à cette image de référence les mêmes traitements qu'à l'image de la pièce à contrôler ;
- comparer chaque image à cette image de référence en opérant par soustraction ou par division des matrices de pixels correspondantes.

4. Procédé selon la revendication 1 ou 2, caractérisé en ce que la correction de chaque image de référence consiste à :
- obtenir deux images de référence à partir d'une pièce ne présentant pas de défaut ;
- comparer une image à une image de référence et l'autre image à l'autre image de référence en opérant par soustraction ou par division des matrices de pixels correspondantes.

5. Procédé selon l'une quelconque des revendications précédentes, caractérisé en ce que la superposition des images est réalisée en opérant une fonction "ET" logique.

6. Dispositif d'acquisition et de traitement d'images radioscopiques en temps réel pour le contrôle d'une pièce, caractérisé en ce qu'il comporte :
- des moyens d'obtention, dans des conditions identiques, d'au moins deux images successives de la pièce à contrôler pour chaque vue de la pièce ;
- des moyens de traitement des images comprenant :
· des premiers moyens de correction opérant un filtrage de chaque image,
· des deuxièmes moyens de correction opérant une comparaison par rapport à une image filtrée de référence ;
- des moyens de seuillage de chaque image ;
- des moyens assurant la fonction "ET" logique entre les images après seuillage.

7. Dispositif selon la revendication 6, caractérisé en ce que les moyens d'obtention d'au moins deux images comprennent une source à rayons X, un détecteur temps réel à amplificateur de brillance, une optique de focalisation, un miroir de renvoi de chaque image photonique de sortie de l'optique de focalisation, des moyens de prise de vues recevant les images renvoyées par le miroir.

8. Dispositif selon les revendications 6 ou 7, caractérisé en ce que les premiers moyens de correction d'image comportent un premier filtre numérique non linéaire de type filtre médian ou fréquentiel et un deuxième filtre numérique de type morphologique ou fréquentiel.

9. Dispositif selon l'une des revendications 6 à 8, caractérisé en ce que les moyens d'obtention de l'image de référence sont réalisés pour le même dispositif à partir d'une pièce ne présentant pas de défaut, les moyens de traitement comportant des moyens de mémorisation de cette image.

## Patentansprüche

1. Verfahren zur Gewinnung und Verarbeitung von Durchleuchtungsbildern in Echtzeit zur Prüfung eines Werkstücks mit den folgenden Verfahrensschritten:
- Gewinnen wenigstens zweier aufeinanderfolgender Durchleuchtungsbilder unter identischen Bedingungen für jede Ansicht des zu prüfenden Werkstücks,
- Umwandeln dieser Durchleuchtungsbilder in auf mehrere Graupegel codierte digitale Videobilder,
- Verarbeiten jedes Bildes, wobei dieses Verarbeiten die folgenden Unterschritte umfaßt:
• Korrigieren jedes Bildes durch digitale Filterung relativ zu sich selbst,
• Korrigieren der gefilterten Bilder durch Vergleichen mit einem Referenzbild,
• binäres Umwandeln der Bilder durch Vergleichen jedes Bildes mit einem Schwellwert, um nur die Bildpunkte zurückzuhalten, die gleich oder größer sind als der Schwellwert und die einem Fehler des Werkstücks entsprechen könnten,
- Überlagern der Bilder, um die einander entsprechenden Bildpunkte zu bestimmen und so die Fehler des Werkstücks zu ermitteln.

2. Verfahren zur Gewinnung und Verarbeitung von Durchleuchtungsbildern nach Anspruch 1, dadurch gekennzeichnet, daß der Unterschritt des Korrigierens jedes Bildes durch digitale Filterung darin besteht, daß
- eine erste morphologische nichtlineare oder frequenzlineare Filterung der Pixelmatrizen jedes Bildes durchgeführt wird, um die lokalen Minima und Maxima der verschiedenen elementaren Untermengen der die Matrizen bildenden Pixel zu eliminieren,
- eine zweite morphologische oder frequenzmäßige Filterung jedes Bildes relativ zu sich selbst durchgeführt wird, die die Gewinnung eines gefilterten Bildes ermöglicht.

3. Verfahren zur Gewinnung und Verarbeitung von Durchleuchtungsbildern nach Anspruch 1, dadurch gekennzeichnet, daß das Korrigieren jedes gefilterten Bildes durch Vergleichen mit einem Referenzbild darin besteht, daß
- ausgehend von einem Werkstück gleichen Typs, das keinerlei Fehler aufweist, ein Referenzbild gewonnen wird,
- dieses Referenzbild den gleichen Verarbeitungen unterzogen wird wie das Bild des zu prüfenden Werkstücks,
- jedes Bild mit dem Referenzbild verglichen wird, indem die entsprechenden Pixelmatrizen subtrahiert oder dividiert werden.

4. Verfahren nach Anspruch 1 oder 2, dadurch gekennzeichnet, daß das Korrigieren jedes Referenzbildes darin besteht, daß
- ausgehend von einem Werkstück, das keinerlei Fehler aufweist, zwei Referenzbilder gewonnen werden,
- ein Bild mit einem Referenzbild und das andere Bild mit dem anderen Referenzbild verglichen wird, indem die entsprechenden Pixelmatrizen subtrahiert oder dividiert werden.

5. Verfahren nach einem der vorhergehenden Ansprüche, dadurch gekennzeichnet, daß das Überlagern der Bilder durch eine logische UND-Verknüpfung durchgeführt wird.

6. Vorrichtung zur Gewinnung und Verarbeitung von Durchleuchtungsbildern in Echtzeit zur Prüfung eines Werkstücks, gekennzeichnet durch
- Mittel zum Gewinnen wenigstens zweier aufeinanderfolgender Bilder unter identischen Bedingungen für jede Ansicht des zu prüfenden Werkstücks,
- Mittel zum Verarbeiten der Bilder mit
• ersten Korrekturmitteln, die jedes Bildes einer Filterung unterziehen,
• zweiten Korrekturmitteln, die einen Vergleich mit einem gefilterten Referenzbild bewirken,
- Mittel zur Schwellwertbewertung jedes Bildes,
- Mittel zur logischen UND-Verknüpfung der Bilder nach der Schwellwertbewertung.

7. Vorrichtung nach Anspruch 6, dadurch gekennzeichnet, daß die Mittel zum Gewinnen wenigstens zweier Bilder eine Röntgenstrahlquelle, einen Echtzeitdetektor mit Luminanzverstärker, eine Fokussierungsoptik, einen Spiegel zur Umlenkung der Photonenbilder am Ausgang der Fokussierungsoptik sowie Abtastmittel umfassen, die die von dem Spiegel umgelenkten Bilder aufnehmen.

8. Vorrichtung nach Anspruch 6 oder 7, dadurch gekennzeichnet, daß die ersten Bildkorrekturmittel ein erstes lineares digitales Filter in Form eines Median- oder Frequenzfilters und ein zweites digitales Filter in Form eines morphologischen oder Frequenzfilters umfassen.

9. Vorrichtung nach einem der Ansprüche 6 bis 8, dadurch gekennzeichnet, daß die Mittel zur Gewinnung des Referenzbildes für die Vorrichtung selbst aus einem Werkstück realisiert werden, das keine Fehler aufweist, und daß die Mittel zum Verarbeiten Mittel zum Speichern dieses Bildes aufweisen.

## Claims

1. Process for acquiring and processing radioscopic images in real time for the inspection of an article, comprising the following steps:
- obtaining at least two successive radioscopic images under identical conditions for each view of the article to be inspected;
- converting these radioscopic images into digital video images encoded over a plurality of grey levels;
- processing each image, this processing including the following sub-steps:
• correcting each image with respect to itself by digital filtering,
• correcting the filtered images by comparison with a reference image,
• binarizing the images by comparison of each image with a threshold, so as to keep only the image points which are greater than or equal to this threshold and which are liable to correspond to a defect of the article,
- and superposing the images in order to determine the image points which correspond, and thus to detect the defects of the article.

2. Acquisition and processing process according to Claim 1, characterized in that the sub-step of correcting each image by digital filtering consists in carrying out:
- non-linear or frequency-linear morphological first filtering of the matrices of pixels of each image in order to eliminate the local minima and maxima of the various elementary subsets of pixels constituting the matrices;
- morphological or frequency second filtering of each image with respect to itself, in order to obtain a filtered image.

3. Acquisition and processing process according to Claim 1, characterized in that the correction of each filtered image by comparison with a reference image consists in:
- obtaining a reference image from an article which is of the same type and does not have any defects;
- subjecting this reference image to the same processing operations as the image of the article to be inspected;
- comparing each image with this reference image by carrying out subtraction or division of the corresponding pixel matrices.

4. Process according to Claim 1 or 2, characterized in that the correction of each reference image consists in:
- obtaining two reference images from an article which does not have any defects;
- comparing one image with one reference image and the other image with the other reference image, by carrying out subtraction or division of the corresponding pixel matrices.

5. Process according to any one of the preceding claims, characterized in that the superposition of the images is performed by carrying out an "AND" logic function.

6. Device for acquiring and processing radioscopic images in real time for the inspection of an article, characterized in that it includes:
- means for obtaining, under identical conditions, at least two successive images of the article to be inspected for each view of the article;
- image processing means comprising:
• first correction means which carry out filtering of each image,
• second correction means which carry out a comparison with respect to a filtered reference image;
- means for thresholding each image;
- means for performing the "AND" logic function between the images after thresholding.

7. Device according to Claim 6, characterized in that the means for obtaining at least two images comprise an X-ray source, a real-time detector with a brightness amplifier, focusing optics, a mirror for reflecting each photonic output image of the focusing optics, and means for taking pictures which receive the images reflected by the mirror.

8. Device according to Claims 6 or 7, characterized in that the first image correction means include a non-linear first digital filter of the median or frequency filter type, and a second digital filter of the morphological or frequency type.

9. Device according to one of Claims 6 to 8, characterized in that the means for obtaining the reference image are effected for the same device using an article which does not have any defects, the processing means including means for storing this image.
